# EUROPÄISCHE PATENTSCHRIFT

(11) **EP 1 307 028 B1**
(45) Veröffentlichungstag und Bekanntmachung des Hinweises auf die Patenterteilung: **29.08.2007**
(21) Anmeldenummer: 02021113.2
(22) Anmeldetag: 23.09.2002
(51) Int. Cl.: G06F 9/46, H04L 29/12

(54) **Anordnung und Verfahren zum Datenaustausch mit Adressierungsservice**
Apparatus and method for data exchange with addressing service
Dispositif et procédé d' échange de données avec service d' addressage

(30) Priorität: 26.10.2001 DE 10152874
(43) Veröffentlichungstag der Anmeldung: 02.05.2003
(73) Patentinhaber: SIEMENS AKTIENGESELLSCHAFT, 80333 München (DE)
(72) Erfinder: Brueggemeier, Wolfgang, 33129 Delbrueck (DE); Hauschild, Hans-Jürgen, 33100 Paderborn (DE); Kage, Gisbert, 33106 Paderborn (DE)

(56) Entgegenhaltungen:
- EP-A- 0 924 618
- WO-A-00/77630
- DE-A1- 19 637 172
- ANONYMOUS: "Overview of the Corba Name Service"[Online] 2000, XP002355875 Internet Gefunden im Internet: URL:http://e-docs.bea.com/wle/naming/over. htm> [gefunden am 2005-11-16]
- ERIK GUTTMAN CHARLES PERKINS SUN MICROSYSTEMS JOHN VEIZADES HOME NETWORK MICHAEL DAY MADISON RIVER TECHNOLOGIES: "Service Location Protocol, Version 2" IETF STANDARD-WORKING-DRAFT, INTERNET ENGINEERING TASK FORCE, IETF, CH, Bd. svrloc, Nr. 15, 20. April 1999 (1999-04-20), XP015028821 ISSN: 0000-0004

## Beschreibung

Die Erfindung betrifft eine Anordnung und ein Verfahren zum Datenaustausch gemäß dem Oberbegriff des Anspruchs 1 bzw. 15.

Anordnungen, bei denen auf Rechnern installierte Anwendungen (Anwendungsprogramme) über Datennetze kommunizieren, sind allgemein bekannt. Gebräuchliche Datennetze basieren auf paketvermittelten Übermittlungsverfahren (Protokollen), bei denen die Daten in Datenpakete unterteilt sind. Ein solches Netz ist vorzugsweise ein LAN (local area network), das die Datenpakete nach dem Internet Protokoll (IP) überträgt. Die Datenpakete werden dabei mit einer Adressierung versehen und über das Netzwerk übertragen. Jeder Rechner besitzt im Netzwerk eine eindeutige Adresse, die IP-Adresse. Zur Übertragung eines Datenpakets zu einem bestimmten Rechner muß dessen korrekte IP-Adresse bekannt sein. Besitzt ein Rechner in einem Netzwerk immer ein und dieselbe festgelegte IP-Adresse, spricht man von einer statischen IP-Adresse. Der Vorrat an IP-Adressen ist jedoch beschränkt, so daß Rechnern, die sich an einem Netzwerk anmelden, jeweils aus einem begrenzten Adressenvorrat zeitlich begrenzt bis zur Abmeldung eine IP-Adresse zugewiesen wird. Diese IP-Adressen bezeichnet man als dynamische IP-Adressen, weil sie bei Anmeldung im Netzwerk jeweils neu zugewiesen werden.

Auf einem Rechner können mehrere Anwendungen installiert sein und parallel betrieben werden, so daß zum Versand von Datenpaketen an eine bestimmte Anwendung die Angabe der IP-Adresse des empfangenden Rechners allein nicht ausreicht. Um die Datenpakete innerhalb dieses Rechners der richtigen Anwendung zuzuordnen, muß jedes Datenpaket neben der IP-Adresse mit einer weiteren eindeutigen Bezeichnung der Anwendung versehen sein. Zur Bezeichnung weist man jeder Anwendung eine innerhalb des Rechners eindeutige Nummer zu, die IP-Portnummer. Um also ein Datenpaket von einer Anwendung über ein Netzwerk zu einer anderen Anwendung zu übertragen, die auf einem entfernten Rechner installiert ist, wird deshalb jeweils eine Adressierung genutzt, die aus der IP-Adresse des Zielrechners und der IP-Portnummer der Anwendung besteht.

Analog zu den IP-Adressen ist auch der Vorrat an möglichen IP-Portnummern beschränkt. Neben einer begrenzten Anzahl häufig verwendeter Anwendungen, die eine fest zugeordnete IP-Portnummer besitzen - man spricht hier auch von well-knownports -, werden den übrigen Anwendungen die Portnummern nur zeitlich begrenzt zugewiesen, die man deshalb auch als dynamische IP-Portnummern bezeichnen kann.

In gebräuchlichen Rechnerarchitekturen findet die Übertragung von Daten zwischen den Anwendungen und dem Netzwerk nicht auf direktem Wege statt. Die Anwendungen bedienen sich vielmehr einer Anzahl von Funktionen, die funktional dem Betriebssystem des Rechners zuzuordnen sind. Diese Funktionen, die einer Anwendung zur Verfügung stehen, um auf das Netzwerk zuzugreifen, werden dem Funktionsumfang von Betriebssystemen in der Regel in Form sogenannter DLLs (DLL = Dynamic Link Library) oder RTLs (RTL = Run Time Library) usw. hinzugefügt. In diesen Bibliotheken ist beispielsweise die Übertragung gemäß einem Protokoll (Netzwerkprotokoll) definiert, beispielsweise dem TCP/IP (TCP = Transfer Control Protocol). Die Anwendung greift auf diese Funktionen - man spricht auch von Funktionsaufrufen - über eine definierte Schnittstelle zu, dem API (API = Application Programming Interface). Die Art und Weise, in der die Anwendung das API verwendet, hängt vom eingesetzten Betriebssystem ab. Weiterhin kann die Art des Funktionsaufrufes, insbesondere das Format einer Parameterübergabe, auch von der Programmiersprache abhängen, die zur Programmierung der Anwendung benutzt wurde.

Man unterscheidet bei APIs zwischen synchronen und asynchronen APIs. Bei der Verwendung von synchronen APIs befindet sich die Anwendung nach dem Aufruf einer API-Funktion so lange im Wartezustand, bis die Aufführung dieser Funktion abgeschlossen ist. Bei der Verwendung von asynchronen APIs hingegen kann die Anwendung nach Aufruf einer API-Funktion in ihrem Programmablauf fortfahren, so daß auch Parallelaktivitäten möglich sind.

Die Druckschrift WO 00/77630 A1 Powers et al, "Communication between software elements" zeigt ein Verfahren und eine Anordnung mit mehreren Software-Elementen, die zur Kommunikation untereinander jeweils mit einer Kommunikations-Software assoziiert sind. Durch die Zuordnung jeweils einer Kommunikations-Software zu jedem Software-Element können die Software-Elemente sowohl auf dem eigenen Computer als auch auf einen anderen Computer im gleichen Kommunikationsnetzwerk verschoben werden, ohne dass die Kommunikationsbeziehung zwischen den Software-Elementen neu etabliert werden muss.

Aus dem Internet ist ein Artikel "Overview of the CORBA name service" eines unbekanntes Verfassers bekannt (URL: http://edocs.bea.com/wle/naming/over.htm) bekannt. In der CORBA-Architektur (CORBA = common object request broker architecture) werden plattformübergreifende Protokolle und Dienste definiert, die objektorientiert verwaltet werden. Zur Kommunikation zwischen den verschiedenen Objekten werden den Objekten durch einen Dienst (CORBA name service) Objekt-Namen zugewiesen. Dabei sind die Objekt-Namen derart strukturiert, dass mit ihnen das zugeordnete Objekt lokalisiert werden kann.

Aus der Druckschrift DE 196 37 172 A1 Han "Zuverlässiges Fern-Prozedur-Aufrufsystem" ist ein Verfahren zur Nutzung von Prozeduren bekannt, welche auf einem entfernten "Host" (Computer, Server) installiert sind. Zur Adressierung der aufrufbaren Prozeduren werden Portnummern verwendet, die den jeweiligen Prozeduren zugeordnet in einer Datenbasis abgespeichert sind, Diese Portnummern werden von einem Portnummern-Server aus der Datenbasis ausgelesen und derjenigen Instanz zugeleitet, welche die jeweilige Prozedur verwenden und damit adressieren soll.

Bei den bisher verwendeten Anordnungen hat sich als nachteilig erwiesen, dass infolge der dynamischen Adressierung in Netzwerken nicht immer sichergestellt ist, dass eine Anwendung stets über die aktuelle Adresse derjenigen Anwendung verfügt, mit der die Kommunikation erfolgen soll.

Aufgabe der Erfindung ist es, eine Anordnung vorzuschlagen, bei der stets eine sichere Adressierung gewährleistet ist.

Die Lösung dieser Aufgabe ist bezogen auf die Anordnung durch die im Anspruch 1 und bezogen auf das Verfahren durch die im Anspruch 15 angegebenen Merkmale gegeben. Durch die kennzeichnenden Merkmale der Unteransprüche ist die Anordnung in vorteilhafter Weise weiter ausgestaltet.

Die Lösung sieht bezogen auf die Anordnung vor, dass ein im Netzwerk angeordneter Adressierungsservice den Anwendungen jeweils beim Anmeldevorgang die zugeordnete Adresse bis zum Abmelden zuweist, und dass jeder Anwendung ein Zugriffsservice zugeordnet ist, der die Adresse derjenigen Anwendung jeweils beim Adressierungsservice abruft, mit welcher der Datenaustausch vorgesehen ist. Hierbei ist gewährleistet, dass den Anwendungen im Netzwerk eindeutige Adressen zugeordnet sind und alle Anwendungen Zugriff auf die jeweils aktuelle Adresse jeder anderen Anwendung haben.

*Die Verwaltung der den Anwendungen zugeordneten Adressen ist besonders effizient, wenn der Adressierungsservice die Bezeichnung jeder angemeldeten Anwendung zusammen mit ihrer aktuellen Adresse in einer Datenbank ablegt.*

Eine vorteilhafte modulare Software-Struktur ist einfach zu realisieren, wenn die Anmeldung der Anwendung über den Zugriffsservice erfolgt und der Zugriffsservice die der Anwendung zugewiesene Adresse übernimmt sowie der Anwendung zum Austausch der Daten zur Verfügung stellt.

Falls das Netzwerk ein IP-Netz ist, in welchem die Adressen der Anwendungen jeweils aus IP-Adresse und IP-Portnummer bestehen, lassen sich eine große Anzahl gebräuchlicher und bewährter aktiver und passiver Netzwerkkomponenten einsetzen.

Eine einzige Schnittstelle zum Zugriff auf den Adressierungsservice reicht aus, falls jeder Zugriffsservice über das IP-Netz mit dem Adressierungsservice kommuniziert.

Es ist von Vorteil, wenn die Routinen zum Zugriff auf das Netzwerk in jedem PC nur einmal vorhanden sein müssen. Das ist möglich, wenn jeder Anwendung ein Kommunikationsservice zum Austausch der Daten über das IP-Netz zwischen den Anwendungen und/oder zwischen dem Zugriffsservice und dem Adressierungsservice zugeordnet ist.

Ein einziger Rückgriff auf den Zugriffsservice bei mehreren Datenübertragungen zwischen zwei Anwendungen reicht aus, wenn der Zugriffsservice die zugewiesene Adresse an die Anwendung übergibt.

Dass eine Kommunikationsbibliothek dem Zugriffsservice und/oder dem Kommunikationsservice Funktionen zur Verfügung stellt, welche von den Anwendungen anhand eines plattformunabhängigen API (Application Programming Interface) verwendbar sind, ermöglicht es, dass die Anwendungen nicht für jede Plattform separat programmiert werden müssen.

Eine größere Flexibilität bei der Programmierung der Anwendungen wird erzielt, wenn das API Funktionen für verschiedene Programmiersprachen bietet.

Den unterschiedlichen Anforderungen synchroner und asynchroner Anwendungen wird besonders gut entsprochen, wenn das durch den Kommunikationsservice zur Verfügung gestellte API synchronen und asynchronen Betrieb der Anwendung unterstützt.

Der zeitgleiche Betrieb mehrerer Anwendungen auf einem PC ist blockierungsfrei möglich, wenn der Kommunikationsservice mehrere Verbindungen zur gleichen Zeit verwalten kann.

Falls die Anwendung in einer plattformunabhängigen Programmiersprache programmiert ist, ist eine Verwendung der gleichen Software auf Rechnern unterschiedlicher Architektur mit geringem Aufwand möglich.

Eine aufwändige Neuprogrammierung der betriebssystemnahen Kommunikationsroutinen erübrigt sich, wenn der Zugriffsservice und/oder der Kommunikationsservice für verschiedene Plattformen erstellt werden, und zwar durch plattformspezifisches compilieren desselben Quellcodes.

Die Anwendungen empfangen alle Anteile einer Datenübertragung in der richtigen Reihenfolge, wenn der Datenaustausch zwischen Kommunikationsservice und Anwendung messageorientiert erfolgt.

Die Erfindung wird nachfolgend anhand eines Ausführungsbeispiels unter Bezugnahme auf die Zeichnung beschrieben. Es zeigen:
Fig. 1 den vollständigen Datenaustausch zwischen zwei angemeldeten Anwendungen in einem Strukturbild,
Fig. 2 das Anmelden einer Anwendung bei einem Adressierungsservice in einem Strukturbild gemäß Fig. 1 und
Fig. 3 den Datenaustausch zwischen zwei Anwendungen in einem Strukturbild gemäß Fig. 1.

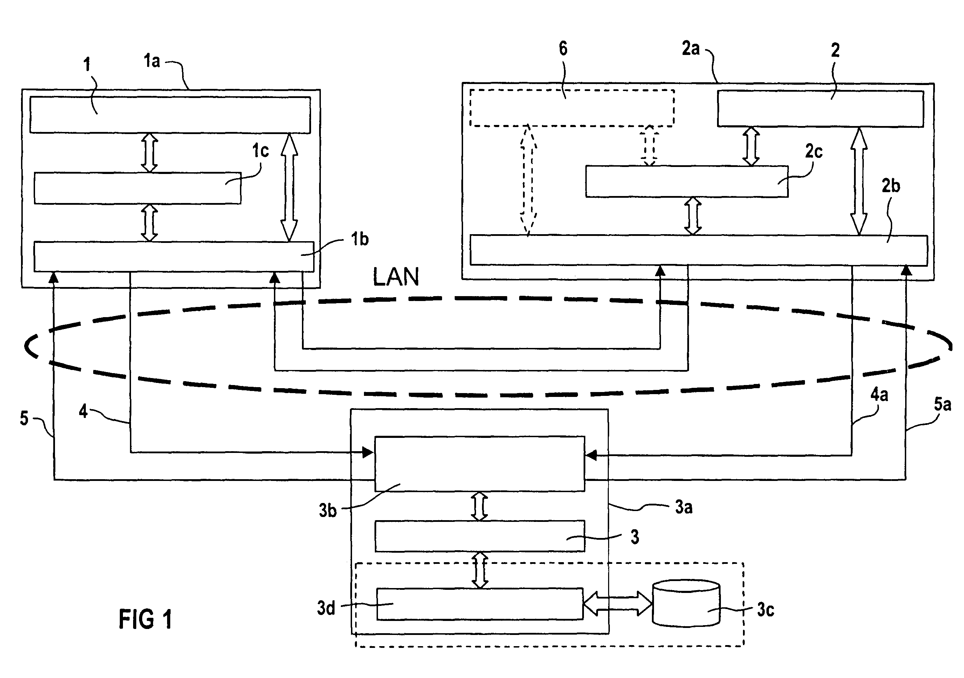

Fig. 1 zeigt in einer schematischen Darstellung ein Kommunikations-Szenario, bei dem zwei Anwendungen 1, 2, 6 Daten über ein LAN in Form von Datenpaketen nach dem Internet Protokoll (IP) austauschen. Am LAN angebunden ist zusätzlich ein Adressierungsservice 3. Die Anwendungen 1, 2, 6 und der Adressierungsservice 3 sind auf getrennten Computern, den PCs 1a, 2a, 3a, installiert. (Der Adressierungsservice 3 kann selbstverständlich auch auf einem der PCs 1a, 2a installiert sein.)

Ein Adressdatensatz, den jede der Anwendungen 1 oder 2 zum Aufbau einer Kommunikation mit einer der anderen Anwendungen 2 bzw. 1 benötigt, besteht jeweils aus einer IP-Adresse des PCs und einer der Anwendung 1, 2, 6 zugeordneten IP-Portnummer, hier also der IP-Adresse des PCs 1a und der IP-Portnummer der Anwendung 1 und der IP-Adresse des PCs 2a und der IP-Portnummer der Anwendung 2.

Die IP-Adresse im LAN wird jedem PC 1a, 2a beim Anmelden im LAN von einem nicht dargestellten Server zugewiesen und ist bis zum Abmelden des PCs 1a, 2a im LAN fest vergeben.

*Auf jedem PC können mehrere Anwendungen 1, 2, 6 installiert sein, weshalb die IP-Adresse des PCs allein nicht zur Adressierung einer Anwendung 1, 2, 6 ausreicht. Folglich wird innerhalb des PCs 1a, 2a jeder Anwendung 1, 2, 6 eine eigene IP-Portnummer zugewiesen. Die IP-Portnummern werden vom Adressierungsservice 3 verwaltet.*

Der PC 1a, auf dem die Anwendung 1 installiert ist, ist mit einer Kommunikations-DLL als Kommunikationsservice 1b versehen, welche die Funktionen zum Zugriff auf das LAN bereitstellt. Dasselbe gilt für den PC 2a und die Anwendung 2 (Kommunikations-DLL als Kommunikationsservice 2b). Aber auch der PC 3a ist mit einer Kommunikations-DLL als Kommunikationsservice 3b ausgerüstet, ebenfalls zum Betrieb von Verbindungen im LAN nach dem Internet-Protokoll (TCP/IP). Der Adressierungsservice 3 verfügt über eine Datenbank 3c zur Speicherung von Adressdatensätzen, mit der er über eine Zugriffseinheit 3d kommuniziert. Die Datenbank 3c kann ebenfalls auf dem PC 3a installiert sein; es ist jedoch auch möglich, dass die Datenbank 3c oder die Zugriffseinheit 3d auf einer externen Hardware installiert sind, die dann üblicherweise auch über ein Datennetz LAN mit dem PC 3a verbunden sind.

*Die IP-Portnummer ermöglicht es dem Kommunikationsservice 1b, 2b, ankommende Datenpakete der zugehörigen Anwendung 1, 2, 6 zuzuordnen, insbesondere wenn mehrere Anwendungen auf einem PC 1a, 2a installiert sind, was im Ausführungsbeispiel aber nicht vorgesehen ist.*

Ein Zugriffsservice 1c, 2c tauscht auf der einen Seite die Adressdatensätze mit seiner zugeordneten Anwendung 1 bzw. 2 (oder Anwendungen) aus und hat auf der anderen Seite über den Kommunikationsservice 1b, 2b jeweils Zugriff auf das LAN.

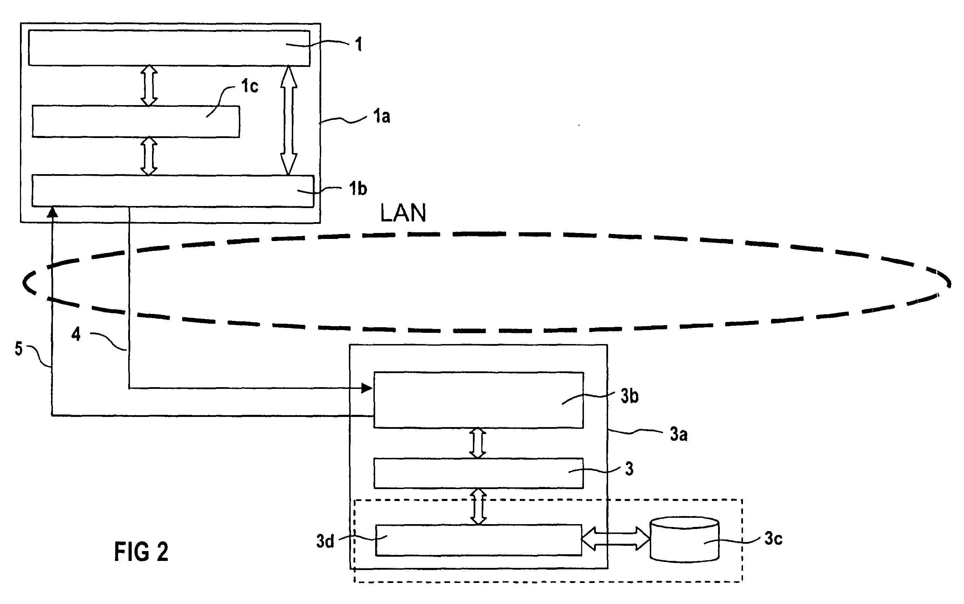

Jede Anwendung 1, 2, 6 meldet sich jeweils nach ihrem Start beim Adressierungsservice 3 an, was in Fig. 2 für die Anwendung 1 dargestellt ist. Beim Start der Anwendung 1 muss dazu deren Adressdatensatz in der Datenbank 3c hinterlegt werden. Dazu greift die Anwendung 1 in einem ersten Schritt auf den Zugriffsservice 1c zu. Der Zugriffsservice 1c baut eine Verbindung 4 zum Adressierungsservice 3 auf, wobei er sich des Kommunikationsservices 1b bedient. Während dieser Verbindung 4 wird ein Datensatz an den Adressierungsservice 3 übermittelt, der im wesentlichen die Bezeichnung der Anwendung 1 und die IP-Adresse des PCs 1a enthält. Der Adressierungsservice 3 ordnet der anzumeldenden Anwendung 1 eine IP-Portnummer zu, legt den so ergänzten Datensatz als Adressdatensatz in der Datenbank 3c ab und übermittelt die zugeordnete IP-Portnummer über die Verbindung 4 im LAN und dem Kommunikationsservice 1b an den Zugriffsservice 1c. Der Zugriffsservice 1c wiederum übermittelt die IP-Portnummer der Anwendung 1.

Einen solchen Anmeldevorgang nimmt jede Anwendung 1, 2, 6 beim Adressierungsservice 3 vor, so dass alle Anwendungen 1, 2, 6 mit einem Adressdatensatz, also ihrer Bezeichnung, der IP-Adresse des jeweiligen PCs 1a, 2a und ihrer jeweiligen IP-Portnummer in der Datenbank 3c jeweils bekannt sind. Umgekehrt wird jede Anwendung 1, 2, 6 auf dem Weg über den Zugriffsservice 1c, 2c, dem Kommunikationsservice 1b, 2b und den Verbindungen 4, 5 über das LAN beim Adressierungsservice 3 wiederum abgemeldet, sobald sie geschlossen wird. Dabei wird der entsprechende Adressdatensatz aus der Datenbank 3c wieder gelöscht.

Fig. 2 zeigt ebenfalls schematisch den Start einer Kommunikation zwischen zwei Anwendungen 1, 2, 6, wobei die Anwendung 1 die Verbindung initiiert. Um die Kommunikation aufzubauen, benötigt die Anwendung 1 zunächst den Adressdatensatz der Anwendung 2. Die Anwendung 1 greift dazu auf den Zugriffsservice 1c zu und übermittelt diesem die Bezeichnung der Anwendung 2. Der Zugriffsservice 1c baut über den Kommunikationsservice 1b, das Netzwerk LAN und den Kommunikationsservice 3b eine Verbindung 4 zum Adressierungsservice 3 auf und übermittelt die Bezeichnung der Anwendung 2. Der Adressierungsservice 3 greift weiter auf die Datenbank 3c zu und ermittelt als Adressdatensatz die zugeordnete IP-Adresse und IP-Portnummer. Dieser Adressdatensatz wird vom Adressierungsservice 3 über eine Verbindung 5 im LAN und den Kommunikationsservice 1b an den Zugriffsservice 1c übermittelt, der wiederum die Anwendung 1 mit diesen Daten versorgt.

Die Anmeldung und die Verbindungsinitiierung sind oben und in Fig. 2 beispielhaft ausgehend von der Anwendung 1 beschrieben. Umgekehrt kann jede Anwendung 1, 2, 6 den Ausgangspunkt bilden, was bei der Anwendung 2 in Fig. 1 durch die analogen Verbindungen 4a, 5a dargestellt ist.

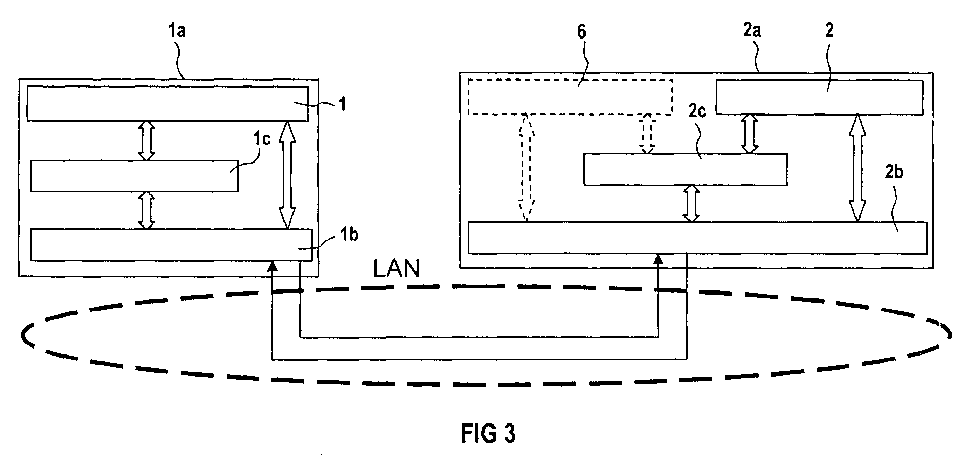

Die Anwendung 1 verwendet nun diesen Adressdatensatz, um über den Kommunikationsservice 1b, das LAN und den Kommunikationsservice 2b eine Verbindung zur Anwendung 2 aufzubauen. Die Kommunikation zwischen den Anwendungen 1, 2, 6 ist Stand der Technik und in Fig.3 dargestellt.

## Patentansprüche

1. Kommunikationsanordnung mit mindestens zwei Anwendungen (1,2,6),
die über ein paketvermitteltes Netzwerk anhand von den Anwendungen (1, 2, 6) zugeordneten Adressen Daten austauschen,
wobei jeder Anwendung (1, 2, 6) ein Zugriffsservice (1c, 2c) zugeordnet ist, der zum jeweiligen Abruf der Adresse derjenigen Anwendung (1, 2, 6), mit welcher der Datenaustausch vorgesehen ist, eingerichtet ist,
wobei
im Netzwerk ein Adressierungsservice (3) angeordnet ist, der zur Zuweisung einer jeweils zugeordneten Adresse zu den Anwendungen (1, 2, 6) jeweils beim Anmeldevorgang bis zum Abmelden eingerichtet ist, und
der Zugriffsservice (1c, 2c) zum jeweiligen Abruf der Adresse beim Adressierungsservice (3) eingerichtet ist.

2. Kommunikationsanordnung nach Anspruch 1,
**dadurch gekennzeichnet,**
**dass** der Adressierungsservice (3) in einer Datenbank (3c) die Bezeichnung jeder angemeldeten Anwendung (1, 2, 6) zusammen mit ihrer aktuellen Adresse ablegt.

3. Kommunikationsanordnung nach einem der Ansprüche 1 oder 2,
**dadurch gekennzeichnet,**
**dass** die Anmeldung der Anwendung (1, 2, 6) über den Zugriffsservice (1c, 2c) erfolgt und der Zugriffsservice (1c, 2c) die der Anwendung (1, 2, 6) zugewiesene Adresse übernimmt sowie der Anwendung (1, 2, 6) zum Austausch der Daten zur Verfügung stellt.

4. Kommunikationsanordnung nach einem der Ansprüche 1 - 3,
**dadurch gekennzeichnet,**
**dass** das Netzwerk ein IP-Netz ist, in welchem die Adressen der Anwendungen (1, 2, 6) jeweils aus IP-Adresse und IP-Portnummer bestehen.

5. Kommunikationsanordnung nach Anspruch 4,
**dadurch gekennzeichnet,**
**dass** jeder Zugriffsservice (1c, 2c) über das IP-Netz mit dem Adressierungsservice (3) kommuniziert.

6. Kommunikationsanordnung nach einem der Ansprüche 4 oder 5,
**dadurch gekennzeichnet,**
**dass** jeder Anwendung (1, 2, 6) ein Kommunikationsservice (1b, 2b, 3b) zum Austausch der Daten über das IP-Netz zwischen den Anwendungen (1, 2, 6) und/oder zwischen dem Zugriffsservice (1c, 2c) und dem Adressierungsservice (3) zugeordnet ist.

7. Kommunikationsanordnung nach einem der Ansprüche 1 - 6,
**dadurch gekennzeichnet,**
**dass** der Zugriffsservice (1c, 2c) die zugewiesene Adresse an die Anwendung (1, 2, 6) übergibt.

8. Kommunikationsanordnung nach einem der Ansprüche 1 - 7,
**dadurch gekennzeichnet,**
**dass** eine Kommunikationsbibliothek dem Zugriffsservice (1c, 2c) und/oder dem Kommunikationsservice (1b, 2b, 3b) Funktionen zur Verfügung stellt, welche von den Anwendungen (1, 2, 6) anhand eines plattformunabhängigen API (Application Programming Interface) verwendbar sind.

9. Kommunikationsanordnung nach Anspruch 8,
**dadurch gekennzeichnet,**
**dass** das API Funktionen für verschiedene Programmiersprachen bietet.

10. Kommunikationsanordnung nach einem der Ansprüche 8 oder 9,
**dadurch gekennzeichnet,**
**dass** das durch den Kommunikationsservice (1b, 2b, 3b) zur Verfügung gestellte API synchronen und asynchronen Betrieb der Anwendung (1, 2, 6) unterstützt.

11. Kommunikationsanordnung nach einem der Ansprüche 1 - 10,
**dadurch gekennzeichnet,**
**dass** der Kommunikationsservice (3b, 3b, 3b) mehrere Verbindungen (4, 5) zur gleichen Zeit verwalten kann.

12. Kommunikationsanordnung nach einem der Ansprüche 1 - 11,
**dadurch gekennzeichnet,**
**dass** die Anwendung (1, 2, 6) in einer plattformunabhängigen Programmiersprache programmiert ist.

13. Kommunikationsanordnung nach einem der Ansprüche 1 - 12,
**dadurch gekennzeichnet,**
**dass** der Zugriffsservice (1c, 2c) und/oder der Kommunikationsservice (1b, 2b, 3b) für verschiedene Plattformen erstellt werden, durch plattformspezifisches compilieren desselben Quellcodes.

14. Kommunikationsanordnung nach einem der Ansprüche 1 - 13,
**dadurch gekennzeichnet,**
**dass** der Datenaustausch zwischen Kommunikationsservice (1b, 2b, 3b) und Anwendung (1, 2, 6) messageorientiert erfolgt.

15. Verfahren zum Austausch von Daten innerhalb einer Kommunikationsanordnung mit mindestens zwei Anwendungen (1, 2, 6) über ein paketvermitteltes Netzwerk anhand von den Anwendungen (1, 2, 6) zugeordneten Adressen,
wobei eine Anwendung (1, 2, 6) mittels eines Zugriffsservices (1c, 2c) die Adresse derjenigen Anwendung (1, 2, 6), mit welcher der Datenaustausch vorgesehen ist, jeweils abruft,
wobei
ein im Netzwerk angeordneter Adressierungsservice (3) den Anwendungen (1, 2, 6) jeweils beim Anmeldevorgang die zugeordnete Adresse bis zum Abmelden zuweist, und die zugeordnete Adresse durch den Zugriffsservice (1c, 2c) jeweils beim Adressierungsservice (3) abgerufen wird.

## Claims

1. Communication arrangement with at least two applications (1, 2, 6),
which exchange data via a packet-switched network using addresses allocated to the applications (1, 2, 6),
whereby an access service (1c, 2c) is allocated to each application (1, 2, 6), said service being set up for the respective retrieval of the address of the application (1, 2, 6) with which the data exchange is intended,
whereby an addressing service (3) is disposed in the network, said service being set up to assign a respectively allocated address to the applications (1, 2, 6) in each case during the logon procedure until logoff, and
the access service (1c, 2c) is set up for the respective retrieval of the address from the addressing service (3).

2. Communication arrangement according to Claim 1,
**characterized in that**
the addressing service (3) stores the designation of each logged-on application (1, 2, 6) together with its current address in a database (3c).

3. Communication arrangement according to one of the Claims 1 or 2,
**characterized in that**
the application (1, 2, 6) logs on via the access service (1c, 2c) and the access service (1c, 2c) takes over the address allocated to the application (1, 2, 6) and makes it available to the application (1, 2, 6) in order to exchange the data.

4. Communication arrangement according to one of the Claims 1 to 3,
**characterized in that**
the network is an IP network, in which the addresses of the applications (1, 2, 6) in each case comprise the IP address and the IP port number.

5. Communication arrangement according to Claim 4,
**characterized in that**
each access service (1c, 2c) communicates via the IP network with the addressing service (3).

6. Communication arrangement according to one of the Claims 4 or 5,
**characterized in that**
a communication service (1b, 2b, 3b) is allocated to each application (1, 2, 6) in order to exchange the data via the IP network between the applications (1, 2, 6) and/or between the access service (1c, 2c) and the addressing service (3).

7. Communication arrangement according to one of the Claims
1-6,
**characterized in that**
the access service (1c, 2c) transfers the allocated address to the application (1, 2, 6).

8. Communication arrangement according to one of the Claims
1-7,
**characterized in that**
a communication library provides the access service (1c, 2c) and/or the communication service (1b, 2b, 3b) with functions which can be used by the applications (1, 2, 6) by means of a platform-independent API (Application Programming Interface).

9. Communication arrangement according to Claim 8,
**characterized in that**
the API offers functions for different programming languages.

10. Communication arrangement according to one of the Claims 8 or 9,
**characterized in that**
the API provided by the communication service (1b, 2b, 3b) supports synchronous and asynchronous operation of the application (1, 2, 6).

11. Communication arrangement according to one of the Claims 1-10,
**characterized in that**
the communication service (1b, 2b, 3b) can administer a plurality of connections (4, 5) at the same time.

12. Communication arrangement according to one of the Claims 1-11,
**characterized in that**
the application (1, 2, 6) is programmed in a platform-independent programming language.

13. Communication arrangement according to one of the Claims 1-12,
**characterized in that**
the access service (1c, 2c) and/or the communication service (1b, 2b, 3b) are set up for different platforms, through platform-specific compilation of the same source code.

14. Communication arrangement according to one of the Claims 1-13,
**characterized in that**
the data are exchanged between the communication service (1b, 2b, 3b) and the application (1, 2, 6) in a message-oriented manner.

15. Method for exchanging data within a communication arrangement with at least two applications (1, 2, 6) via a packet-switched network using addresses allocated to the applications (1, 2, 6),
whereby an application (1, 2, 6) in each case retrieves the address of the application (1, 2, 6) with which the data exchange is intended by means of an access service (1c, 2c),
whereby an addressing service (3) disposed in the network assigns the allocated address to the applications (1, 2, 6) in each case during the logon procedure until logoff, and the allocated address is retrieved in each case by the access service (1c, 2c) from the addressing service (3).

## Revendications

1. Dispositif de communication comportant au moins deux applications (1, 2, 6),
qui échangent des données par l'intermédiaire d'un réseau à commutation de paquets à l'aide d'adresses associées aux applications (1, 2, 6),
dans lequel il est associé à chaque application (1, 2, 6) un service d'accès (1c, 2c) qui est installé pour l'appel respectif de l'adresse de celle des applications (1, 2, 6) avec laquelle l'échange de données est prévu,
dans lequel il est agencé dans le réseau un service d'adressage (3) qui est installé pour l'attribution d'une adresse respectivement associée aux applications (1, 2, 6) lors de chaque opération de connexion jusqu'à la déconnexion, et
dans lequel le service d'accès (1c, 2c) est installé pour l'appel respectif de l'adresse auprès du service d'adressage (3).

2. Dispositif de communication selon la revendication 1,
**caractérisé par le fait que** le service d'adressage (3) enregistre dans une base de données (3c) la désignation de chaque application connectée (1, 2 6) conjointement avec son adresse actuelle.

3. Dispositif de communication selon l'une des revendications 1 ou 2,
**caractérisé par le fait que** la connexion de l'application (1, 2 6) s'effectue par l'intermédiaire du service d'accès (1c, 2c) et que le service d'accès (1c, 2c) prend en charge l'adresse attribuée à l'application (1, 2, 6) et la met à la disposition de l'application (1, 2, 6) pour l'échange des données.

4. Dispositif de communication selon l'une des revendications 1 à 3,
**caractérisé par le fait que** le réseau est un réseau IP dans lequel les adresses des applications (1, 2, 6) sont constituées à chaque fois d'une adresse IP et d'un numéro de port IP.

5. Dispositif de communication selon la revendication 4,
**caractérisé par le fait que** chaque service d'accès (1c, 2c) communique par l'intermédiaire du réseau IP avec le service d'adressage (3).

6. Dispositif de communication selon l'une des revendications 4 ou 5,
**caractérisé par le fait qu'**il est associé à chaque application (1, 2, 6) un service de communication (1b, 2b, 3b) pour l'échange des données par l'intermédiaire du réseau IP entre les applications (1, 2, 6) et/ou entre le service d'accès (1c, 2c) et le service d'adressage (3).

7. Dispositif de communication selon l'une des revendications 1 à 6,
**caractérisé par le fait que** le service d'accès (1c, 2c) transmet l'adresse attribuée à l'application (1, 2, 6).

8. Dispositif de communication selon l'une des revendications 1 à 7,
**caractérisé par le fait qu'**une bibliothèque de communication met à la disposition du service d'accès (1c, 2c) et/ou du service de communication (1b, 2b, 3b) des fonctions qui sont utilisables par les applications (1, 2, 6) à l'aide d'une API (Application Programming Interface) indépendante de la plateforme.

9. Dispositif de communication selon la revendication 8,
**caractérisé par le fait que** l'API offre des fonctions pour différents langages de programmation.

10. Dispositif de communication selon l'une des revendications 8 ou 9,
**caractérisé par le fait que** l'API mise à disposition par le service de communication (1b, 2b, 3b) supporte des exploitations synchrone et asynchrone de l'application (1, 2, 6).

11. Dispositif de communication selon l'une des revendications 1 à 10,
**caractérisé par le fait que** le service de communication (3b, 3b, 3b) peut gérer plusieurs liaisons (4, 5) en même temps.

12. Dispositif de communication selon l'une des revendications 1 à 11,
**caractérisé par le fait que** l'application (1, 2, 6) est programmée dans un langage de programmation indépendant de la plateforme.

13. Dispositif de communication selon l'une des revendications 1 à 12,
**caractérisé par le fait que** le service d'accès (1c, 2c) et/ou le service de communication (1b, 2b, 3b) sont élaborés pour différentes plateformes, par compilation du même code source de manière spécifique à la plateforme.

14. Dispositif de communication selon l'une des revendications 1 à 13,
**caractérisé par le fait que** l'échange de données entre service de communication (1b, 2b, 3b) et application (1, 2, 6) s'effectue de manière orientée sur les messages.

15. Procédé d'échange de données à l'intérieur d'un dispositif de communication comportant au moins deux applications (1, 2, 6) par l'intermédiaire d'un réseau à commutation de paquets et à l'aide d'adresses associées aux applications (1, 2, 6),
dans lequel une application (1, 2, 6) appelle à chaque fois au moyen d'un service d'accès (1c, 2c) l'adresse de celle des applications (1, 2, 6) avec laquelle l'échange de données est prévu,
dans lequel, lors de chaque opération de connexion, un service d'adressage (3) agencé dans le réseau attribue aux applications (1, 2, 6) l'adresse associée jusqu'à la déconnexion, et
dans lequel l'adresse associée est appelée par le service d'accès (1c, 2c) à chaque fois auprès du service d'adressage (3).
